(19) Europäisches Patentamt
European Patent Office
Office européen des brevets

(11) EP 3 381 286 A1

(12) EUROPEAN PATENT APPLICATION
published in accordance with Art. 153(4) EPC

(43) Date of publication:
**03.10.2018 Bulletin 2018/40**

(21) Application number: **16865425.9**

(22) Date of filing: **21.04.2016**

(51) Int Cl.:
***A01N 47/36*** *(2006.01)* ***A01N 43/22*** *(2006.01)*
***A01P 21/00*** *(2006.01)*

(86) International application number:
**PCT/CN2016/079851**

(87) International publication number:
**WO 2017/084242 (26.05.2017 Gazette 2017/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.11.2015 CN 201510797112**

(71) Applicant: **Jiangsu Huifeng Bio Agriculture Co., Ltd.**
**Yancheng, Jiangsu 224100 (CN)**

(72) Inventors:
- **GU, Guoliang**
  **Yancheng, Jiangsu 224100 (CN)**
- **ZHONG, Hangen**
  **Yancheng, Jiangsu 224100 (CN)**
- **JI, Hongjin**
  **Yancheng, Jiangsu 224100 (CN)**
- **ZHANG, Jie**
  **Yancheng, Jiangsu 224100 (CN)**
- **TAI, Shaojie**
  **Yancheng, Jiangsu 224100 (CN)**

(74) Representative: **Engelhard, Markus**
**Boehmert & Boehmert**
**Anwaltspartnerschaft mbB**
**Pettenkoferstrasse 22**
**80336 München (DE)**

# (54) PLANT GROWTH REGULATOR COMPOSITION WITH SYNERGISTIC ACTION

(57) The present invention discloses a plant growth regulator composition having synergistic effect. The effective ingredients of the composition comprise active components A and B, wherein the active component A is thidiazuron, and the active component B is brassinolide or a derivative thereof. Also provided are a preparation method and use of the composition. Experimental results indicate that the composition of the present invention is effective in regulating the growth, increasing the disease and stress resistance, promoting the health and increasing the yield of crops.

EP 3 381 286 A1

## Description

## BACKGROUND

### Technical Field

The present invention relates to the field of protection of agricultural plants, in particular to a plant growth regulator composition with improved properties, and particularly to a composition comprising the pesticides thidiazuron and brassinolide.

### Related Art

Brassinolide is a new green and environmentally friendly plant growth regulator that is applied in a route of seed impregnation with or spraying an appropriate concentration of brassinolide onto the stems and leaves. Brassinolide can promote the growth of vegetables, melons, fruits and other crops, improve the quality and increase yield, and bring forth beautiful color and thicker leaves, and also can make the picking time of tea leaves ahead of schedule, allow the fruits and melons to have a high sugar content, a large size, a high yield, a long storage time. Brassinolide is harmless to human and animals, and is safe and effective when used at a normal dosage. Natural brassinolide can be widely used with a variety of economic crops, and can significantly improve the quality, increase the sugar content in and the weight of the fruits, and beautify the color of flowers. At the same time, it can also increase the drought resistance and cold resistance of crops and alleviate the symptoms of crops suffering from pests, diseases, fertilizer and freezing damages.

At present, over 30 brassinolides have been found. Brassinolide is usually used as a mixture of one or more brassinolides having similar structures. Among them, only a few have high biological activity and practical value. Brassinolide has a chemical structure of:

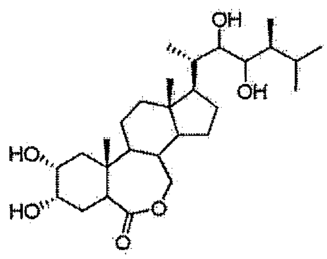

BR1 481

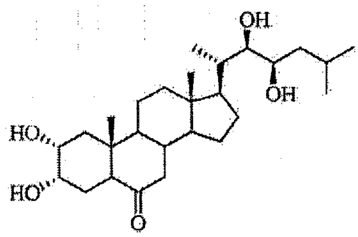

BR2 482

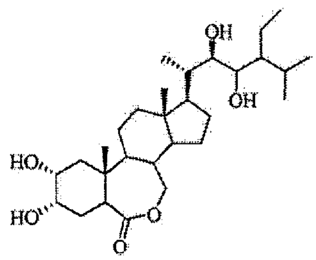

BR3 494

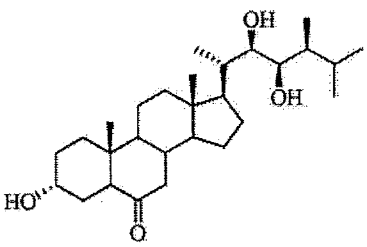

BR4 449

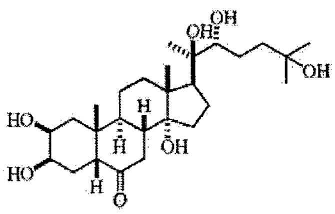

BR5 482

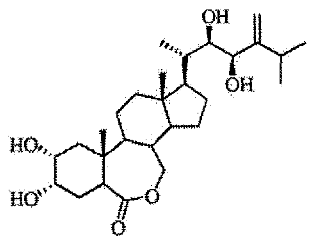

BR8 479

Thidiazuron is a novel and effective plant growth regulator. After being absorbed by plants, thidiazuron can promote the separation of petioles from stems to cause natural falling. Thidiazuron can be widely used in pesticides and fertilizers, since it has a high biological activity, and an ability to induce plant cell division and callus formation that is many times higher than a usual cytokinin. Thidiazuron can enhance the absorption capacity of crops, and increase photosynthesis, so as to achieve the purpose of increasing the yield and improving the quality. Thidiazuron can be used with various melons, fruits, vegetables, seedlings, flowers, grains, tobacco and other crops, and also in tissue culturing and genetic engineering. In regard to the production, thidiazuron can significantly enhance the crop yield and improve the quality at a low dosage, causes no pollution to ecological environment, and is non-toxic to human, livestock, birds, bees, and natural enemies thereof, etc.

Currently, the commercially available plant growth regulators are mainly single agents having simple effects.

## SUMMARY

An object of the present invention is to provide a plant growth regulator composition having synergistic effect, so as to promote the growth, increase the disease resistance and the yield of crops. The present inventors find that brassinolide or a derivative thereof has a significant synergistic effect with thidiazuron in regulating or promoting the growth of plants.

Another object of the present invention is to provide a method for preparing a plant growth regulator composition comprising active components A and B and use thereof in regulating or promoting the growth of crops in the agricultural area.

The objects of the present invention can be achieved through the following measures.

A plant growth regulator composition having synergistic effect is provided. The composition comprises active components A and B, wherein the active component A is thidiazuron, and the active component B is brassinolide or a derivative thereof, and the weight ratio of the active component A to the active component B is 1: (0.001-0.19).

In a preferred embodiment, the weight ratio of the active component A to the active component B is 1: (0.001-0.17), and the weight ratio is further preferably 1: (0.0012-0.16) or 1: (0.0011-0.143), to achieve a better effect.

The brassinolide used in the present invention may be a natural brassinolide extract, or chemically synthesized brassinolide.

The brassinolide used in the present invention is a mixture of one or more commonly used types of brassinolides having similar structures, for example, BR1, BR2, BR3, BR4, BR5 and BR6 alone or in admixture, which are all common species of brassinolides known in the art.

In the present invention, the derivative of brassinolide may be a new substance derived from brassinolide by simple modification of groups on its structure, for example, propionyl brassinolide, 24-epibrassinolide, 22,23,24-epibrassinolide, 28-epihomobrassinolide, 28-homobrassinolide, and 14-hydrocarbylbrassinosteroid etc.

The present inventors find through experiments that the composition of the present invention is useful in well regulating the growth, promoting the health and increasing the yield of crops.

The present invention provides use of a composition comprising a component A (thidiazuron) and a component B (brassinolide or a derivative thereof) in regulating the growth of crops in the agricultural area, particularly in regulating the growth and improving the resistance to disease of rice, wheat or fruit trees.

For the purpose of fully exerting the advantageous effects of the present invention, the composition of the present invention may also be used in combination with other pesticides (such as fungicides, insecticides, herbicides, and plant growth regulators), fertilizers and so on, all of which are commonly used pesticides or fertilizers disclosed in the prior art.

The composition of the present invention may be prepared into a pesticidally acceptable formulation with the active ingredients and a pesticide adjuvant.

The composition may specifically comprise a pesticide adjuvant, such as one or more of a carrier, a solvent, a dispersant, a wetting agent, a binder, a thickener, an adhesive, a surfactant and the like. A commonly used adjuvant may be blended during application.

The suitable adjuvant may be a solid or liquid that is generally a material commonly used in the preparation of formulations, for example, a natural or regenerated mineral substance, a solvent, a dispersing agent, a wetting agent, an adhesive, a thickener, a binder or a fertilizer.

The composition of the present invention may be applied by administering the composition of the present invention to the aboveground parts of plants, in particular to the leaves or leaf surface thereof. The composition may be used for seed impregnation, or applied onto the surface of the objects to be controlled. The application frequency and dosage depend on the pathogen biology and the climatic and maintenance conditions. The locus where the plant is growing, for example rice field, may be impregnated with a liquid formulation of the composition, or the composition is applied in solid form to the soil, for example, in granular form (soil application), where the composition penetrates the plant through the roots via the soil (systemic action).

The composition may be used by applying the active ingredients alone or in admixture with additives (pesticide adjuvant).

The composition of the present invention may be prepared into pesticidally acceptable formulations, for example, an aqueous solution, a suspension, a soluble concentrate, an oily suspension, microcapsules, a microemulsion, or a wettable powder. Depending on the properties of the compositions, the objectives intended to be achieved by applying the compositions, and the environmental conditions, the compositions may be applied by spraying, atomizing, dusting, scattering, or pouring.

Suitable microcapsule formulations in the present invention include: microcapsule suspensions, microcapsule suspension-suspensions, microcapsule suspension-aqueous emulsions and the like, where the wall of the capsule (i.e., the capsule core) encloses a mixture of the active ingredients brassinolide and thidiazuron at a certain ratio, that is, the two are mixed to prepare into microcapsules. The microcapsules are stably dispersed and suspended at a certain

concentration in water as a continuous phase to form a microcapsule suspension. Alternatively, one of the active ingredients is prepared into a microcapsule suspension, and the other active ingredient is prepared into an emulsion. The two ingredients prepared are mixed, stirred and shaken fully to obtain a microcapsule suspension-suspension or a microcapsule suspension-aqueous emulsion.

The composition of the present invention may be prepared into various formulations through known processes. The active ingredients may be uniformly mixed with an adjuvant such as a solvent or a solid carrier and a surfactant if needed, and ground to prepare a desired formulation.

The solvent may be selected from aromatic hydrocarbons containing preferably 8 to 12 carbon atoms, for example, a xylene mixture, substituted benzene, or a phthalate ester, for example, dibutyl or dioctyl phthalate; aliphatic hydrocarbons, for example, cyclohexane or paraffin; alcohols, glycols and ethers and esters thereof, for example, ethanol, ethylene glycol, and ethylene glycol monomethyl ether; ketones, for example, cyclohexanone; high-polarity solvents, for example, N-methyl-2-pyrrolidone, dimethyl sulfoxide, or dimethyl formamide; and vegetable oils, for example, soy bean oil.

The solid carrier includes for example natural mineral fillers generally used in wettable powders and dispersible powders, for example, talc, kaolin, montmorillonite or activated bauxite. To manage the physical properties of the composition, highly dispersive silicic acid or highly dispersive absorbent polymer carrier may also be added, for example, granular adsorptive carrier or non-adsorptive carrier. The suitable granular adsorptive carrier is porous, for example, pumice, soapy clay or bentonite. The suitable non-adsorptive carrier includes for example calcite or sand. Moreover, a large amount of inorganic or organic material that is pre-prepared into granules and especially dolomite may be used as the carrier.

As desired by the chemical nature of the active ingredients in the composition according to the present invention, the suitable surfactant includes lignin sulfonic acid, naphthalenesulfonic acid, phenolsulfonic acid, alkaline earth metal or amine salts, alkylarylsulfonates, alkylsulfates, alkylsulfonates, fatty alcohol sulfates, fatty acids and ethylene glycol sulfated fatty alcohol ethers, condensation products of sulfonated naphthalene and naphthalene derivatives with formaldehyde, condensation products of naphthalene or naphthalenesulfonic acid with phenol and formaldehyde, polyoxyethylene octyl phenyl ethers, ethoxylated iso-octylphenol, octylphenol, nonylphenol, alkylaryl polyethylene glycol ethers, tributylphenyl polyethylene glycol ether, tristearylphenyl polyethylene glycol ether, alkylaryl polyether alcohols, ethoxylated castor oil, polyoxyethylene alkyl ethers, condensation products of ethylene oxide, ethoxylated polyoxypropylene, polyethylene glycol ether laurate acetal, sorbates, waste lignin sulfite liquor, and methyl cellulose.

Plants in the present invention include, but are not limited to, sorghum, wheat or corn.

The two active ingredients in the composition of the present invention have a synergistic effect, such that the activity of the composition is obviously higher than the respective activity or expected sum of the respective activity of single compounds alone. The composition of the present invention exhibits the following additional features. 1. The composition of the present invention has an obvious synergistic effect. 2. Because the two individual agents in the composition of the present invention have highly different structures and completely different mechanisms of action, no cross resistance exists, such that the problem of resistance development occurred due to the use of single agents alone can be retarded. 3. The composition of the present invention can well regulate the growth, increase the disease and stress resistance, promote the health and increase the yield of crops.

## DETAILED DESCRIPTION

To make the objects, the technical solution, and advantages of the present invention clearer, the present invention is described in further detail with reference to examples. It should be understood that the specific examples described herein are merely provided for illustrating, instead of limiting the present invention. Any modifications and equivalent improvements and substitutions can be made thereto without departing from the spirit and principle of the present invention, which are all fall within the protection scope of the present invention.

The percentages given in all the formulations in the examples below are all weight percentages. The various formulations are processed from the composition of the present invention by a process known in the prior art which may be varied as desired.

I. Preparation examples of formulations

(I) Processing and examples of suspensions

The active ingredients brassinolide and thidiazuron were uniformly mixed with a dispersing agent, a wetting agent, a thickener, water and other components in proportion, and ground and/or high-speed sheared to give a semi-finished product, which was analyzed, supplemented with water, mixed uniformly, and filtered, to obtain a finished product.

**Example 1:** 1.001% thidiazuron•brassinolide suspension
thidiazuron 1%, brassinolide 0.001%, Xantham gum 3%, ethylene glycol 2%, Kaolin 6%, magnesium aluminum silicate 4%, sodium ligninsulfonate 5%, and water q.s. to 100%.

**Example 2:** 0.201% thidiazuron•brassinolide suspension
thidiazuron 0.2%, brassinolide 0.001%, bentonite 6%, glycerol 3%, sodium methyl naphthalene sulfonate-formaldehyde condensate 6%, and water q.s. to 100%.

**Example 3:** 0.58% thidiazuron•brassinolide suspension
thidiazuron 0.5%, brassinolide 0.08%, white carbon black 5%, glycerol 6%, sodium benzoate 3%, fatty alcohol polyoxyethylene ether phosphate 6%, and water q.s. to 100%.

**Example 4:** 0.55% thidiazuron•propionyl brassinolide suspension
thidiazuron 0.5%, propionyl brassinolide 0.05%, white carbon black 5%, ethylene glycol 3%, sodium ligninsulfonate 7%, Xantham gum 2%, and water q.s. to 100%.

**(II) Processing and examples of microcapsules**

The active ingredients brassinolide and thidiazuron were mixed at a certain ratio and prepared into microcapsules. The microcapsules are stably dispersed and suspended at a certain concentration in water as a continuous phase to form a microcapsule suspension. Alternatively, one of the active ingredients is prepared into a microcapsule suspension, and the other active ingredient is prepared into an emulsion. The two ingredients prepared are mixed, stirred and shaken fully to obtain a microcapsule suspension-suspension or a microcapsule suspension-aqueous emulsion.

**Example 5:** 1.003% thidiazuron•propionyl brassinolide microcapsule suspension
thidiazuron 1%, propionyl brassinolide 0.003%, turpentine-based vegetable oil 12%, lactic acid glyceride 3%, the emulsifier polyoxyethylene castor oil 4%, the stabilizer triphenyl phosphite 3.5%, tolylene diisocyanate 15%, acrylic acid-acrylate copolymer 5%, dipropylene glycol 3%, the preserver sodium benzoate 1%, the thickener Xantham gum 2.1%, and water q.s. to 100%.

**Example 6:** 0.501% thidiazuron•brassinolide microcapsule suspension-suspension
thidiazuron 0.5%, brassinolide 0.001%, coconut fatty acid methyl ester 15%, polyoxyethylene monopalmitate 3%, BHT 3%, the attractant amino acid 2%, lignosulfonate 4%, glycerol 5%, Kathon 2%, vinyl acetate emulsion 4%, Xantham gum 2%, and water q.s. to 100%.

**Example 7:** 0.31% thidiazuron•brassinolide microcapsule suspension
thidiazuron 0.3%, brassinolide 0.01%, turpentine-based vegetable oil 11%, the attractant glycerin fatty acid ester 4%, polyoxyethylene lauryl ether 5%, ethylene glycol 2.5%, the stabilizer potassium dihydrogen phosphate 2%, the capasule forming prepolymer formaldehyde-urea prepolymer 18%, Carrageenan 0.5%, sodium ligninsulfonate 4%, the preserver sodium benzoate 1%, and water q.s. to 100%.

**Example 8:** 0.4027% thidiazuron•brassinolide microcapsule suspension-suspension
thidiazuron 0.4%, brassinolide 0.0027%, gelatin 15%, ethanol 4%, triethylamine 2%, ethylenediamine 5%, naphthalene sulfonate formaldehyde condensate 4%, and water q.s. to 100%.

**(III) Processing and examples of soluble concentrates**

A mixture of the active ingredients thidiazuron and brassinolide at a certain ratio was placed in a enamel vessel together with a surfactant, an adjuvant and water, and fully stirred in a water bath until a clear liquid was obtained that is a soluble concentrate.

**Example 9:** 0.305% thidiazuron•brassinolide soluble concentrate
thidiazuron 0.3%, brassinolide 0.005%, sodium alkyl benzene sulfonate 5%, methanol 12%, ethylene glycol 5%, and water q.s. to 100%.
**Example 10:** 0.505% thidiazuron•brassinolide soluble concentrate
thidiazuron 0.5%, brassinolide 0.005%, alkyl phenol polyoxyethylene polyoxypropylene ether 2%, methanol 2%, ethylene glycol 5%, and water q.s. to 100%.
**Example 11:** 0.408% thidiazuron-brassinolide soluble concentrate

thidiazuron 0.4%, brassinolide 0.008%, benzyl dimethyl phenol polyoxyethylene ether 4%, cyclohexanone 3%, N,N-dimethyl formamide5%, ethylene glycol 5%, and water q.s. to 100%.

**Example 12:** 0.238% thidiazuron•brassinolide soluble concentrate

thidiazuron 0.2%, brassinolide 0.038%, the emulsifier 0203B 10%, isopropanol 15%, ethylene glycol 5%, urea 5%, and water q.s. to 100%.

**(IV) Processing and examples of aqueous solutions**

The active ingredients and an adjuvant were added to a reactor, added up with water, and stirred until uniform, to obtain a thidiazuron•brassinolide aqueous solution.

**Example 13:** 0.20022% thidiazuron•brassinolide aqueous solution

0.2% thidiazuron, 5% dimethyl sulfoxide, and 5% ethanol were mixed uniformly and stirred for 20 min. 0.00022% brassinolide was added and stirred for 30 min until brassinolide was completely dissolved. 8% sodium alkyl sulfate was added, added up with water, and stirred until uniform to obtain a 0.20022% thidiazuron•brassinolide aqueous solution.

**Example 14:** 0.351% thidiazuron•propionyl brassinolide aqueous solution

0.3% raw thidiazuron and 8% ethanol were added to a reactor, and stirred for 20 min. Then, 0.051% acetyl brassinolide was added and stirred for 30 min, until the acetyl brassinolide was completely dissolved. 10% fatty alcohol polyoxyethylene ether was added, added up with water, and stirred until uniform to obtain a 0.351% thidiazuron•propionyl brassinolide aqueous solution.

**Example 15:** 0.10125% thidiazuron•brassinolide aqueous solution

0.1% thidiazuron and 5% ethanol were added to a reactor, and stirred for 20 min. Then, 0.00125% brassinolide was added and stirred for 30 min, until the brassinolide was completely dissolved. 5% fatty alcohol polyoxyethylene ether was added, added up with water, and stirred until uniform to obtain a 0.10125% thidiazuron•brassinolide aqueous solution.

**Example 16:** 0.315% thidiazuron•brassinolide aqueous solution

0.3% thidiazuron, 6% tetrahydrofuran, and 3% propylene glycol were added to a reactor and stirred for 20 min. 0.015% brassinolide was added and stirred for 30 min until brassinolide was completely dissolved. 6% sodium alkyl sulfate was added, added up with water, and stirred until uniform to obtain a 0.3025% thidiazuron•brassinolide aqueous solution.

**II. Efficiency verification test**

(I) Bioassay examples

1. Comprehensive test on growth regulation for sorghum by thidiazuron combined with brassinolide

The thidiazuron and brassinolide were diluted with acetone to give a series of concentrations, and the stems and leaves of crops were sprayed to determine the effect of each concentration on crop growth in the field, so as to make a comprehensive evaluation with respect to the plant height and diameter, the root length, the disease resistance, the quality of fruits, and the yield.

Plant height control rate = (Plant height in water control group-Plant height in treatment group)/Plant height in water control group*100%

Stem diameter increase rate = (Stem diameter in water control group-Stem diameter in treatment group)/Stem diameter in water control group*100%

Prevention effect = (Disease index in water control group-Disease index in treatment group)/Disease index in water control group*100%

Increase rate in 1000-grain weight = (1000-grain weight in water control group - 1000-grain weight in treatment group)/1000-grain weight in water control group*100%

Increase rate in yield per mu = (Yield per mu in water control group-Yield per mu in treatment group)/Yield per mu in water control group*100%

Table 1. Summary of comprehensive test on growth regulation of sorghum by thidiazuron combined with brassinolide

| Name of agent | Application amount (active ingredient) | Early tasselling stage | | | | | | Maturity and harvest period | | | |
|---|---|---|---|---|---|---|---|---|---|---|---|
| | | Plant height (cm) | Control rate (%) | Stem diameter (cm) | Increase rate (%) | Disease index of leaf blight | Prevention effect (%) | Weight of 1000 grains | Increase rate (%) | Yield (kg/ $667M^2$) | Increase rate (%) |
| Pyraclo: brassin = 1000:1 | 4.3mg/kg | 116.9 | 6.2 | 2.57 | 3.6 | 8.4 | 38.9 | 23.0 | 7.8 | 578.8 | 7.8 |
| Pyraclo: brassin = 900: 1 | 4.3mg/kg | 116.5 | 6.5 | 2.58 | 4.0 | 7.9 | 42.2 | 23.1 | 8.1 | 579.7 | 8.0 |
| Pyraclo: brassin = 800: 1 | 4.3mg/kg | 116.0 | 6.9 | 2.58 | 3.9 | 7.7 | 43.5 | 23.2 | 8.7 | 588.0 | 9.5 |
| Pyraclo: brassin = 700: 1 | 4.3mg/kg | 115.7 | 7.2 | 2.65 | 6.7 | 7.6 | 44.6 | 23.2 | 8.7 | 587.7 | 9.5 |
| Pyraclo: brassin = 600: 1 | 4.3mg/kg | 115.3 | 7.5 | 2.68 | 7.9 | 7.2 | 47.3 | 23.4 | 9.9 | 595.1 | 10.9 |
| Pyraclo: brassin = 500: 1 | 4.3mg/kg | 114.9 | 7.8 | 2.73 | 9.9 | 7.1 | 48.2 | 23.6 | 10.8 | 600.4 | 11.9 |
| Pyraclo: brassin = 400: 1 | 4.3mg/kg | 114.5 | 8.1 | 2.75 | 10.7 | 6.7 | 50.9 | 23.7 | 11.0 | 601.3 | 12.0 |
| Pyraclo: brassin = 300: 1 | 4.3mg/kg | 114.3 | 8.3 | 2.80 | 12.8 | 5.6 | 59.4 | 23.8 | 11.6 | 605.1 | 12.7 |
| Pyraclo: brassin = 200: 1 | 4.3mg/kg | 113.8 | 8.7 | 2.82 | 13.6 | 5.2 | 61.7 | 24.1 | 12.9 | 612.8 | 14.2 |

(continued)

| Name of agent | Application amount (active ingredient) | Early tasselling stage | | | | | | Maturity and harvest period | | | |
|---|---|---|---|---|---|---|---|---|---|---|---|
| | | Plant height (cm) | Control rate (%) | Stem diameter (cm) | Increase rate (%) | Disease index of leaf blight | Prevention effect (%) | Weight of 1000 grains | Increase rate (%) | Yield (kg/ 667M$^2$) | Increase rate (%) |
| Pyraclo: brassin = 100: 1 | 4.3mg/kg | 112.3 | 9.9 | 2.84 | 14.4 | 5.1 | 62.9 | 24.5 | 14.7 | 623.0 | 16.1 |
| Pyraclo: brassin = 80:1 | 4.3mg/kg | 111.6 | 10.4 | 2.86 | 15.3 | 4.9 | 64.4 | 24.5 | 15.1 | 625.2 | 16.5 |
| Pyraclo: brassin = 60:1 | 4.3mg/kg | 109.0 | 12.5 | 2.90 | 16.8 | 4.8 | 65.1 | 24.8 | 16.5 | 633.6 | 18.0 |
| Pyraclo: brassin = 40:1 | 4.3mg/kg | 108.3 | 13.1 | 2.86 | 15.2 | 4.6 | 66.2 | 24.8 | 16.2 | 631.7 | 17.7 |
| Pyraclo: brassin = 20:1 | 4.3mg/kg | 110.5 | 11.3 | 2.81 | 13.2 | 5.7 | 58.3 | 23.8 | 11.6 | 604.8 | 12.7 |
| Pyraclo: brassin = 10:1 | 4.3mg/kg | 112.0 | 10.1 | 2.72 | 9.8 | 5.9 | 56.7 | 23.4 | 9.6 | 593.0 | 10.5 |
| Pyraclo: brassin = 8:1 | 4.3mg/kg | 113.1 | 9.2 | 2.69 | 8.6 | 6.9 | 49.6 | 23.4 | 9.7 | 588.0 | 9.5 |
| Pyraclo: brassin = 7:1 | 4.3mg/kg | 113.5 | 8.9 | 2.67 | 7.5 | 7.8 | 43.1 | 23.2 | 8.8 | 583.1 | 8.6 |
| Pyraclo: brassin = 6:1 | 4.3mg/kg | 113.9 | 8.6 | 2.65 | 6.7 | 7.9 | 42.6 | 23.0 | 7.7 | 579.4 | 7.9 |
| pyraclo: brassin = 5.7:1 | 4.3mg/kg | 114.5 | 8.1 | 2.64 | 6.2 | 8.1 | 40.6 | 23.0 | 7.7 | 578.8 | 7.8 |
| pyraclo: brassin = 5.5:1 | 4.3mg/kg | 115.5 | 7.3 | 2.63 | 6.0 | 8.3 | 39.7 | 22.8 | 7.1 | 574.6 | 7.0 |
| pyraclo: brassin = 5.2:1 | 4.3mg/kg | 116.8 | 6.3 | 2.62 | 5.6 | 8.7 | 36.8 | 22.7 | 6.6 | 572.6 | 6.7 |
| pyraclo: brassin = 5.0:1 | 4.3mg/kg | 117.7 | 5.5 | 2.59 | 4.4 | 9.4 | 31.4 | 22.4 | 5.0 | 557.9 | 3.9 |

(continued)

| Name of agent | Application amount (active ingredient) | Early tasselling stage | | | | | | Maturity and harvest period | | | |
|---|---|---|---|---|---|---|---|---|---|---|---|
| | | Plant height (cm) | Control rate (%) | Stem diameter (cm) | Increase rate (%) | Disease index of leaf blight | Prevention effect (%) | Weight of 1000 grains | Increase rate (%) | Yield (kg/ $667M^2$) | Increase rate (%) |
| Pyraclo: brassin = 4.8:1 | 4.3mg/kg | 118.5 | 4.9 | 2.55 | 2.8 | 10.3 | 25.0 | 22.3 | 4.7 | 554.4 | 3.3 |
| Thidiazuron | 4mg/kg | 120.4 | 3.4 | 2.56 | 2.4 | 10.4 | 24.1 | 22.1 | 3.6 | 555.8 | 3.5 |
| Brassinolide | 0.3mg/kg | 121.0 | 2.9 | 2.54 | 3.2 | 11.9 | 12.9 | 22.2 | 4.2 | 560.4 | 4.4 |
| Water control (CK) | -- | 124.6 | -- | 2.48 | -- | 13.7 | -- | 21.3 | -- | 536.8 | -- |

Note: In the table "brassin" is an abbreviation for "brassinolide", and "pyraclo" is an abbreviation for "thidiazuron". Application time: early trumpet stage, during which no brown spots of sorghum take place. Times of application: 2, with an interval of 8 days therebetween; modes of application: spraying on stems and leaves; and investigation time: early tasselling stage of sorghum. In this experiment, the plant height, stem diameter, disease index, 1000-grain weight and other indicators are all averages of each treatment group.

The present inventors find through experiments that thidiazuron and brassinolide have a good synergistic effect. The combinations of thidiazuron with brassinolide at various ratios have an obvious growth regulation effect on sorghum, compared with thidiazuron and brassinolide alone, and water control. The growth regulation effect is mainly manifested as follows. 1. The present invention can effectively increase the plant diameter of sorghum, enhance the nutrient transportation in the plants, and improve the lodging resistance during growth of sorghum by increasing the plant diameter. 2. When used alone, thidiazuron imparts a disease and stress resistance to the plants, and brassinolide is an intrinsic plant growth hormone, and has some immunity to crop disease. When co-applied, brassinolide and thidiazuron have a good synergistic effect therebetween. As can be seen from the above analysis, the synergistic effect between thidiazuron and brassinolide produce a good prevention effect on brown spot of sorghum relative to single agents alone and water control. 3. The present invention can effectively regulate the excessive vegetative and spindly growth of sorghum, which means reducing the plant height and ear position of sorghum, effectively balancing the relationship between vegetative growth and reproductive growth, and preventing the lodging. 4. Because of the synergistic effect between thidiazuron and brassinolide, in the early growth stage of sorghum, the nutrient transportation in sorghum and disease resistance of sorghum are promoted, and the 1000-grain weight and yield per mu of sorghum are significantly enhanced in the maturity period of sorghum, where the yield per mu is increased by as high as 17.22%. 5. When thidiazuron is combined with brassinolide at a ratio of (5.2-1000):1, an obvious synergistic effect is exhibited, and when the ratio of thidiazuron to brassinolide is less than 5.2, no obvious synergistic effect is exhibited between them.

II. Field Efficiency verification test

**1. Comprehensive test on growth regulation, disease resistance, and yield increase for oat by thidiazuron combined with brassinolide in field**

Application time: filling stage of oat, because diseases such as powdery mildew easily take place during the earing period.

Time of application: 1. Formulation examples of the present invention were sprayed, and the results were an average of three replicates.

Table 2. Comprehensive test on growth regulation for oat by thidiazuron combined with brassinolide in field

| Name of agent | Application amount (a.i.g/ha) | Comprehensive test on growth regulation for oat | | | | | | | | | |
|---|---|---|---|---|---|---|---|---|---|---|---|
| | | Plant height (cm) | Control rate (%) | Stem diameter (mm) | Increase rate (%) | Disease index of powdery mildew | Prevention effect (%) | Weight of 1000 grains | Increase rate (%) | Yield (667M2) | Increase rate (%) |
| Example 1 | 5.4mg/kg | 116.4 | 7.5 | 2.49 | 7.6 | 10.68 | 29.6 | 37.23 | 8.5 | 652.9 | 8.6 |
| Example 2 | 5.4mg/kg | 114.7 | 8.8 | 2.51 | 8.5 | 9.30 | 38.8 | 38.10 | 11.1 | 670.8 | 11.6 |
| Example 3 | 5.4mg/kg | 115.9 | 7.9 | 2.49 | 7.8 | 10.47 | 31.0 | 37.49 | 9.3 | 658.4 | 9.5 |
| Example 4 | 5.4mg/kg | 111 | 11.8 | 2.58 | 11.5 | 8.33 | 45.1 | 39.21 | 14.3 | 691.5 | 15.0 |
| Example 5 | 5.4mg/kg | 115.5 | 8.2 | 2.51 | 8.5 | 9.57 | 36.9 | 37.66 | 9.8 | 661.3 | 10.0 |
| Example 6 | 5.4mg/kg | 116.1 | 7.7 | 2.50 | 8.2 | 10.22 | 32.7 | 37.44 | 9.1 | 657.1 | 9.3 |
| Example 7 | 5.4mg/kg | 107.2 | 14.8 | 2.65 | 14.6 | 6.40 | 57.8 | 40.66 | 18.6 | 714.3 | 18.8 |
| Example 8 | 5.4mg/kg | 107.3 | 14.7 | 2.64 | 14.3 | 6.43 | 57.6 | 40.36 | 17.7 | 707.2 | 17.6 |
| Example 9 | 5.4mg/kg | 106.3 | 15.5 | 2.65 | 14.7 | 6.29 | 58.6 | 40.71 | 18.7 | 709.8 | 18.1 |
| Example 10 | 5.4mg/kg | 106.8 | 15.1 | 2.64 | 14.3 | 6.59 | 56.6 | 40.42 | 17.8 | 712.0 | 18.4 |
| Example 11 | 5.4mg/kg | 114 | 9.4 | 2.52 | 9.2 | 9.63 | 36.6 | 38.06 | 11.0 | 668.9 | 11.3 |
| Example 12 | 5.4mg/kg | 116.6 | 7.3 | 2.49 | 7.7 | 10.68 | 29.7 | 37.27 | 8.7 | 654.1 | 8.8 |
| Example 13 | 5.4mg/kg | 116.2 | 7.6 | 2.48 | 7.5 | 10.71 | 29.5 | 37.32 | 8.8 | 654.7 | 8.9 |
| Example 14 | 5.4mg/kg | 116 | 7.8 | 2.49 | 7.9 | 10.43 | 31.3 | 37.63 | 9.7 | 660.1 | 9.8 |
| Example 15 | 5.4mg/kg | 105.9 | 15.8 | 2.66 | 15.3 | 5.62 | 63.0 | 40.83 | 19.1 | 715.2 | 19.0 |
| Example 16 | 5.4mg/kg | 109.8 | 12.7 | 2.60 | 12.3 | 7.79 | 48.7 | 39.84 | 16.1 | 700.1 | 16.5 |
| Thidiazuron | 5.0 mg/kg | 120.1 | 4.5 | 2.38 | 3.2 | 13.16 | 13.3 | 35.73 | 4.2 | 627.3 | 4.3 |
| Brassinolide | 0.4 mg/kg | 122.2 | 2.9 | 2.42 | 4.6 | 12.72 | 16.2 | 35.80 | 4.4 | 628.4 | 4.5 |
| Water control (CK) | | 125.8 | | 2.31 | | 15.18 | | 34.3 | | 601.2 | |

The experimental data in Table 2 shows that when applied in the earing stage of oats, the product of the present invention can effectively regulate the healthy growth of oats, as manifested in that 1. the spike length of oats is increased and the number of grains per spike is enhanced; 2. the weight of oat grains is significantly increased; 3. the excessive vegetative and spindly growth of oats is effectively controlled, to prevent the lodging of wheat; 4. thidiazuron has a promotion for the growth of oats, brassinolide imparts a disease and stress resistance to the oats, and a synergistic effect is exhibited after mixing of them; and 5. the yield per unit of oats can be significantly improved by the composition of the present invention.

## Claims

1. A plant growth regulator composition having synergistic effect, comprising active components A and B, wherein the active component A is thidiazuron, and the active component B is brassinolide or a derivative thereof, and the weight ratio of the active component A to the active component B is 1: 0.001-0.19.

2. The composition according to claim 1, wherein the weight ratio of the active component A to the active component B is 0.001-0.17.

3. The composition according to claim 2, wherein the weight ratio of the active component A to the active component B is 0.0012-0.16.

4. The composition according to claim 2, wherein the weight ratio of the active component A to the active component B is 0.0011-0.143.

5. The composition according to claim 1, wherein the brassinolide derivative is selected from propionyl brassinolide.

6. The composition according to claim 1, which is in a pesticidally acceptable formulation prepared with the active ingredients and an adjuvant.

7. The composition according to claim 6, wherein the formulation is an aqueous solution, a suspension, a soluble concentrate or microcapsules.

8. Use of the pesticide composition according to any one of claims 1 to 7 in promoting or regulating the growth of plants in the agricultural area.

9. The use according to claim 8, wherein the plants are selected from sorghum, wheat or corn.

# INTERNATIONAL SEARCH REPORT

International application No. PCT/CN2016/079851

**A. CLASSIFICATION OF SUBJECT MATTER**

A01N 47/36 (2006.01) i; A01N 43/22 (2006.01) n; A01P 21/00 (2006.01) n

According to International Patent Classification (IPC) or to both national classification and IPC

B. FIELDS SEARCHED

Minimum documentation searched (classification system followed by classification symbols)

A01N

Documentation searched other than minimum documentation to the extent that such documents are included in the fields searched

Electronic data base consulted during the international search (name of data base and, where practicable, search terms used)

CNABS, DWPI, CNKI; bē nfú, gā ofē ngsù, nóngyuèlì, nosar, pē nchángjī ng, tiā nfē ngsù, yìfē ngsù, yúndà-120, brassica, , tribuni, tuō luòbǎ o, tuō yèlíng, tuō yèniào, yìguǒ líng, cytokinin, hormone, growth agent, growth, thidiazuron, TDZ, brassiniolide, BR, brassins, plant growth regulators, PGR

C. DOCUMENTS CONSIDERED TO BE RELEVANT

| Category* | Citation of document, with indication, where appropriate, of the relevant passages | Relevant to claim No. |
|---|---|---|
| X | CN 101658167 A (JIANGXI COTTON RESEARCH INSTITUTE) 03 March 2010 (03.03.2010) description, page 2, lines 16-22, and pages 3-6 | 1-9 |
| X | CN 1478390 A (YUNDA SCI & TECHNOLOGY CO., LTD.) 03 March 2004 (03.03.2004) claims 1, 2, 4, 6-8, description, pages 3 and 4 | 1-9 |
| A | CN 101856028 A (SHAANXI WELCH CROP PROTECTION CO., LTD.) 13 October 2010 (13.10.2010) the whole document | 1-9 |
| A | CN 102613246 A (SICHUAN LOMON BIOTECHNOLOGY CO., LTD.) 01 August 2012 (01.08.2012) the whole document | 1-9 |
| A | WO 0058338 A1 (AGRITOPE INCORPORATED) 05 October 2000 (05.10.2000) the whole document | 1-9 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&"document member of the same patent family

| Date of the actual completion of the international search | Date of mailing of the international search report |
|---|---|
| 12 August 2016 | 23 August 2016 |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br>YU, Aili<br>Telephone No. (86-10) 62084391 |

Form PCT/ISA /210 (second sheet) (July 2009)

**INTERNATIONAL SEARCH REPORT**
Information on patent family members

International application No.
PCT/CN2016/079851

| Patent Documents referred in the Report | Publication Date | Patent Family | Publication Date |
|---|---|---|---|
| CN 101658167 A | 03 March 2010 | CN 101658167 B | 25 July 2012 |
| CN 1478390 A | 03 March 2004 | None | |
| CN 101856028 A | 13 October 2010 | None | |
| CN 102613246 A | 01 August 2012 | None | |
| WO 0058338 A1 | 05 October 2000 | US 6239073 B1 | 29 May 2001 |
| | | AU 3773600 A | 16 October 2000 |

Form PCT/ISA /210 (patent family annex) (July 2009)